# EUROPÄISCHE PATENTANMELDUNG

(11) **EP 4 726 304 A1**
(43) Veröffentlichungstag der Anmeldung: **15.04.2026**
(21) Anmeldenummer: 25192221.7
(22) Anmeldetag: 28.07.2025
(51) Int. Cl.: F25D 23/08

(54) **DICHTUNGSPROFIL**

(30) Priorität: 14.10.2024 DE 102024129688
(71) Anmelder: Binder GmbH, 78532 Tuttlingen (DE)
(72) Erfinder: Pepler, Alexander, 78166 Donaueschingen (DE); Arabul, Ahmet, 78532 Tuttlingen (DE)
(74) Vertreter: Westphal, Mussgnug & Partner Patentanwälte mbB

(57) **Zusammenfassung**

Die Erfindung betrifft ein Dichtungsprofil (10) zur Abdichtung eines Spalts (130) zwischen einer Tür (120a) und einem Türanschlag (125), welches als Hohlprofil (11) mit einer Wandung (12), welche eine Innenseite (12a) und eine Außenseite (12b) aufweist und mit der Innenseite (12a) einen Hohlraum (14) umschließt, ausgebildet ist, wobei das Hohlprofil (11) einen Profilfuß (20) sowie eine erste Dichtlippe (30) aufweisend ein erstes Ende (31) und ein zweites Ende (32) und eine zweite Dichtlippe (40) aufweisend ein erstes Ende (41) und ein zweites Ende (42) aufweist.

## Beschreibung

Die Erfindung betrifft ein Dichtungsprofil zur Abdichtung eines Spalts zwischen einer Tür und einem Türanschlag.

Klimaschränke sind aus dem Stand der Technik in unterschiedlichen Ausgestaltungen vorbekannt und werden in wissenschaftlichen Laboren oder im industriellen Einsatz zur Simulation von biologischen, chemischen und/oder physikalischen Umwelteinflüssen, wie beispielsweise Temperatur, Luftdruck und/oder Luftfeuchtigkeit verwendet. Ein Klimaschrank umfasst ein Gehäuse mit einem in dem Gehäuse angeordneten Innenraum, wobei in dem Innenraum die biologischen, chemischen und/oder physikalischen Umwelteinflüsse simuliert werden.

Bekannt sind Klimaschränke mit einem Gehäuse mit wenigstens einem eine Tür aufweisendes Grundkörper und einem Innenraum, der durch die wenigstens eine Tür verschließbar. Dabei soll die Tür gegen einen an dem Grundkörper angeordneten Türanschlag in einer geschlossenen Position möglichst abdichtend anliegen. Der Türanschlag kann dabei sowohl an einem feststehenden Teil des Grundkörpers, beispielsweise einem Türrahmen, als auch an einer weiteren Tür in dem Fall, dass der Klimaschrank eine Doppelflügeltür aufweist, angeordnet sein.

Die Türen der Klimaschränke ermöglichen nicht nur einen physischen Zugang zu dem Innenraum, sondern müssen ebenfalls als Wandung eine thermische Isolierung aufweisen, um den Innenraum von der Umgebung thermisch zu entkoppeln. Im Innern der Klimaschränke kann ein gewünschtes Klima eingestellt werden, insbesondere durch Regelung der Temperatur und/oder der Luftfeuchte. Typischerweise können Klimaschränke Temperaturen zwischen -10°C und 100° einstellen, jedoch gibt es ebenso Klimaschränke für den Hochtemperaturbereich, die dauerhaft Temperaturen von bis zu 350° im Innenraum einstellen können, oder auch Tiefkältegeräte, welche dauerhaft Temperaturen von bis zu -85° einstellen können. Die Türen müssen dabei einerseits eine ausreichende Isolation aufweisen und weiterhin den Spalt zwischen der Tür und dem Türanschlag dicht verschließen, sodass neben einem Wärmeaustausch mit der Umgebung auch ein Stoffaustausch unterbunden werden kann. Dazu ist es bekannt, an der Tür oder an dem Türanschlag eine Dichtung vorzusehen.

Beispielsweise offenbart die DE 20 2008 000 970 U1 ein elastisches Dichtungsprofil mit einem Profilfuß zum Halten des Dichtungsprofils in einer Nut eines Rahmenfalzes eines Türanschlags sowie einem Profilkopf, an welchem eine Dichtlippe angeordnet ist, welche bei geschlossener Tür an einer Fläche der Tür anliegt.

Weitere Dichtungsprofile, welche bei geschlossener Tür eine Dichtwirkung an einer einzigen Fläche herstellen, sind in der EP 0 436 810 A1, der DE 87 11 518 U1 und der DE 85 28 149 U1 bekannt.

Als Nachteil der aus dem Stand der Technik bekannten Dichtungsprofile hat sich jedoch herausgestellt, dass eine Abdichtung mit einer Dichtlippe an einer Fläche für viele Anwendungszwecke, insbesondere in Klimaschränken mit extremen Klimabedingungen, nicht ausreichend ist.

Die Aufgabe der Erfindung besteht daher darin, ein Dichtungsprofil bereitzustellen, welches eine verbesserte Dichtwirkung ermöglicht.

Diese Aufgabe wird durch ein Dichtungsprofil mit den Merkmalen des Patentanspruchs 1 gelöst.

Vorteilhafte Ausgestaltungen und Weiterbildungen der Erfindung werden in den Unteransprüchen angegeben.

Das erfindungsgemäße Dichtungsprofil zur Abdichtung eines Spalts zwischen einer Tür und einem Türanschlag, ist als Hohlprofil mit einer Wandung, welche eine Innenseite und eine Außenseite aufweist und mit der Innenseite einen Hohlraum umschließt, ausgebildet, wobei das Hohlprofil einen Profilfuß sowie eine erste Dichtlippe aufweisend ein erstes Ende und ein zweites Ende und eine zweite Dichtlippe aufweisend ein erstes Ende und ein zweites Ende aufweist, wobei der Profilfuß etwa U-förmig mit einem ersten Profilfußschenkel aufweisend ein erstes Ende und ein zweites Ende, einem zweiten Profilfußschenkel aufweisend ein erstes Ende und ein zweites Ende und einem Profilfußboden ausgebildet ist, wobei der zweite Profilfußschenkel länger ist als der erste Profilfußschenkel, wobei die erste Dichtlippe mit ihrem ersten Ende über ein erstes Gelenk an dem ersten Ende des ersten Profilfußschenkels angeordnet ist, wobei die zweite Dichtlippe mit ihrem ersten Ende über ein zweites Gelenk an dem ersten Ende des zweiten Profilfußschenkels angeordnet ist, wobei das zweite Ende der ersten Dichtlippe und das zweite Ende der zweiten Dichtlippe über ein drittes Gelenk miteinander verbunden sind, und wobei die erste Dichtlippe und die zweite Dichtlippe an dem dritten Gelenk einen ersten Winkel bilden, welcher größer als 180° ist. Das Vorsehen von zwei Dichtlippen, welche über ein Gelenk miteinander verbunden sind, welches einen ersten Winkel von mehr als 180° bildet, führt dazu, dass das Dichtungsprofil an dem dritten Gelenk zwischen den beiden Dichtlippen nach innen einknicken kann, wenn die Tür an den Türanschlag einschwenkt, und somit die beiden Dichtlippen an zwei im Winkel zueinander stehenden Flächen dichtend zur Anlage gebracht werden können, was im Vergleich zu einer einzigen Dichtlippe, welche lediglich an einer Fläche dichtend zur Anlage gebracht werden kann, eine verbesserte Dichtwirkung hervorruft. Der erste Winkel liegt im unbelasteten Zustand des Dichtungsprofils vorzugsweise zwischen 230° und 250° und beträgt beispielsweise etwa 240°, während im Einbauzustand bei geschlossener Tür und somit belasteten Zustand der erste Winkel vorzugsweise etwa 270° beträgt.

Vorzugsweise sind das erste Gelenk, das zweite Gelenk und das dritte Gelenk durch eine Materialschwächung in der Wandung des Hohlprofils ausgebildet. Derartig ausgebildete Gelenke lassen sich einfach und kostengünstig fertigen.

Gemäß einer besonders bevorzugten Ausführungsform der Erfindung ist das dritte Gelenk durch eine Materialschwächung auf der Außenseite der Wandung des Hohlprofils ausgebildet. Dadurch kann das Einknicken des Dichtungsprofils zwischen den beiden Dichtlippen nach innen begünstigt werden.

Vorzugsweise ist das erste Gelenk durch eine Materialschwächung auf der Innenseite der Wandung des Hohlprofils ausgebildet. Durch eine derartige Ausgestaltung kann das Verschwenken der ersten Dichtlippe gegen den Profilfuß nach innen begünstigt werden.

Vorteilhafterweist ist das zweite Gelenk durch eine Materialschwächung auf der Innenseite der Wandung des Hohlprofils ausgebildet ist. Durch eine derartige Ausgestaltung kann das Verschwenken der zweiten Dichtlippe gegen den Profilfuß nach innen begünstigt werden.

Gemäß einer bevorzugten Ausgestaltung der Erfindung ist die erste Dichtlippe als ebenes Element ausgebildet. Eine derartige Ausgestaltung ermöglicht eine möglichst große Dichtfläche.

Vorteilhafterweise weist die erste Dichtlippe eine erste Dichtlippenlängsachse und der erste Profilfußschenkel eine erste Profilfußschenkellängsachse auf, welche in einem unbelasteten Zustand des Dichtungsprofils in einem zweiten Winkel zwischen 100° und 125° zueinander angeordnet sind, wobei vorzugsweise der zweite Winkel etwa 108° beträgt. Durch eine derartige Ausgestaltung können Toleranzen zwischen der Tür und dem Türanschlag in der geschlossenen Position ausgeglichen werden und trotzdem eine gute Dichtwirkung erreicht werden.

Eine besonders bevorzugte Ausgestaltung der Erfindung sieht vor, dass die zweite Dichtlippe einen L-förmigen Querschnitt mit einem ersten Schenkel umfassend das erste Ende der zweiten Dichtlippe und einem zweiten Schenkel umfassend das zweite Ende der zweiten Dichtlippe aufweist, wobei die beiden Schenkel in einem dritten Winkel zwischen 80° und 90°, wobei vorzugsweise der dritte Winkel etwa 85° beträgt, zueinander angeordnet sind, insbesondere starr relativ zueinander. Durch eine derart winklig ausgebildete zweite Dichtlippe kann einerseits eine möglichst große Dichtfläche zwischen dem zweiten Schenkel und der Anlagefläche erreicht werden, wobei der Anpressdruck durch den ersten Schenkel aufgebracht werden kann. Die Ausgestaltung derart, dass der dritte Winkel zwischen den beiden Schenkeln kleiner als 90° ist, begünstigt dabei das Aufbringen des Anpressdrucks. Die starre Anordnung der beiden Schenkel der zweiten Dichtlippe bedeutet mit anderen Worten, dass gerade kein Gelenk vorgesehen ist, wodurch der Anpressdruck zur Erzielung der Dichtwirkung verbessert werden kann.

Vorzugsweise weist der erste Schenkel der zweiten Dichtlippe eine erste Dichtlippenschenkellängsachse und der zweite Profilfußschenkel eine zweite Profilfußschenkellängsachse auf, welche in einem unbelasteten Zustand des Dichtungsprofils in einem vierten Winkel zwischen 100° und 125°, wobei vorzugsweise der vierte Winkel etwa 105° beträgt, zueinander angeordnet sind. Durch eine derartige Ausgestaltung können Toleranzen zwischen der Tür und dem Türanschlag in der geschlossenen Position ausgeglichen werden und trotzdem eine gute Dichtwirkung erreicht werden.

Dadurch, dass in einer bevorzugten Ausgestaltung der zweite Winkel zwischen der ersten Dichtlippenlängsachse und der ersten Profilfußschenkellängsachse von dem vierten Winkel zwischen der ersten Dichtlippenschenkellängsachse und der zweiten Profilfußschenkellängsachse abweicht, vorzugsweise um einen Differenzwinkel von 2° bis 4°, kann der Toleranzausgleich und die Dichtwirkung weiter verbessert werden.

Vorzugsweise ist an dem Profilfuß an der Außenseite der Wandung des Hohlprofils, vorzugsweise an dem ersten Profilfußschenkel und/oder dem zweiten Profilfußschenkel, wenigstens ein Haltemittel angeordnet, welches vorzugsweise als Haltelippe oder Halterippe ausgebildet ist. Durch derartige Haltemittel kann das Dichtungsprofil gegen Herausfallen aus einer Nut an der Tür oder dem Türanschlag gesichert werden, beispielsweise dadurch, dass ein verbesserter Reibschluss erreicht wird oder auch dadurch, dass die Haltemittel in entsprechende Ausnehmungen, beispielsweise Schlitze, rastend eingreifen.

Vorteilhafterweise weist der Profilfußboden an der Außenseite der Wandung des Hohlprofils eine Riffelung auf, welche eine verbesserte Montier- und Demontierbarkeit des Dichtungsprofils, insbesondere durch eine Ent- und Belüftung, beim Einsetzen des Dichtungsprofils in eine Nut an der Tür oder dem Türanschlag ermöglichen kann.

Gemäß einer besonders bevorzugten Ausführungsform der Erfindung ist das Dichtungsprofil aus einem Kunststoff, vorzugsweise einem Silikon, gefertigt. Die Verwendung eines derartigen Materials begünstigt die elastischen Eigenschaften und die Dichtwirkung des Dichtungsprofils. Das Dichtungsprofil kann dabei vorzugsweise durch ein Extrusionsverfahren hergestellt sein.

Ein erfindungsgemäßes Dichtungsprofil kommt vorzugsweise in einem Klimaschrank zur Anwendung, welcher eine zwischen einer geöffneten und einer geschlossenen Position verschwenkbaren Tür und einen Türanschlag aufweist, wobei der Türanschlag eine erste Anschlagfläche und eine zweite Anschlagfläche aufweist, welche in einem fünften Winkel zwischen 80° und 100° zueinander angeordnet sind, wobei an der Tür das erfindungsgemäße Dichtungsprofil angeordnet ist, und wobei in einem geschlossenen Zustand der Tür die erste Dichtlippe zumindest abschnittsweise an der ersten Anschlagfläche und die zweite Dichtlippe zumindest abschnittsweise an der zweiten Anschlagfläche anliegen. Durch Abdichtung zweier zueinander in dem fünften Winkel angeordneten Anschlagflächen kann eine gute Dichtwirkung erreicht werden. Der fünfte Winkel kann beispielsweise etwa 90° betragen.

Ein Ausführungsbeispiel der Erfindung wird anhand der nachfolgenden Figuren ausführlich erläutert. Es zeigen
- Fig. 1: einen Querschnitt eines Ausführungsbeispiels eines erfindungsgemäßen Dichtungsprofils im unbelasteten Zustand,
- Fig. 2: einen Querschnitt des Dichtungsprofils gemäß Fig. 1 im belasteten Zustand,
- Fig. 3: eine Ansicht von vorne auf ein Ausführungsbeispiel eines Klimaschranks mit einer Tür in einer geöffneten Position, an welcher ein Dichtungsprofil gemäß Fig. 1 angeordnet ist,
- Fig. 4: eine Ansicht von vorne auf den Klimaschrank gemäß Fig. 3 mit der Tür in einer geschlossenen Position,
- Fig. 5: eine Ansicht von oben auf den Klimaschrank gemäß Fig. 4,
- Fig. 6: eine Ausschnittvergrößerung eines Querschnitts durch den Klimaschrank gemäß Fig. 5,
- Fig. 7: eine perspektivische Ansicht des Klimaschranks gemäß Fig. 3 und
- Fig. 8: eine Ausschnittvergrößerung aus Fig. 7.

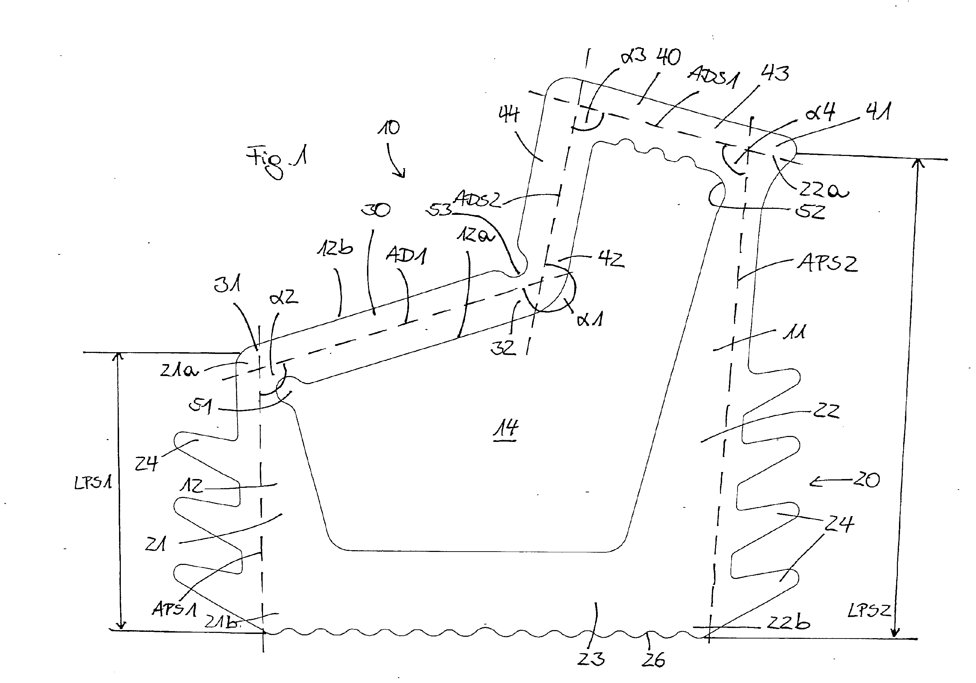

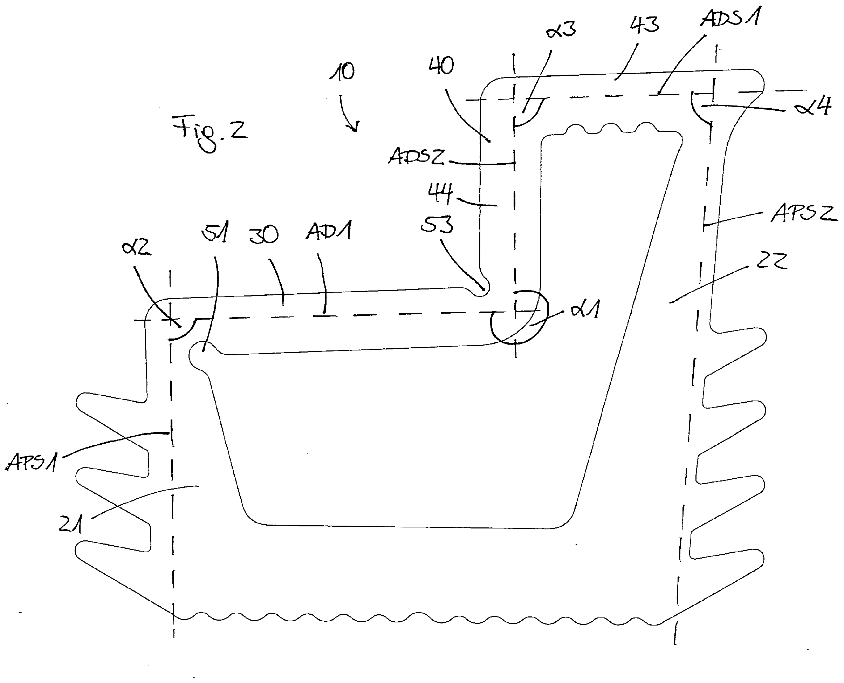

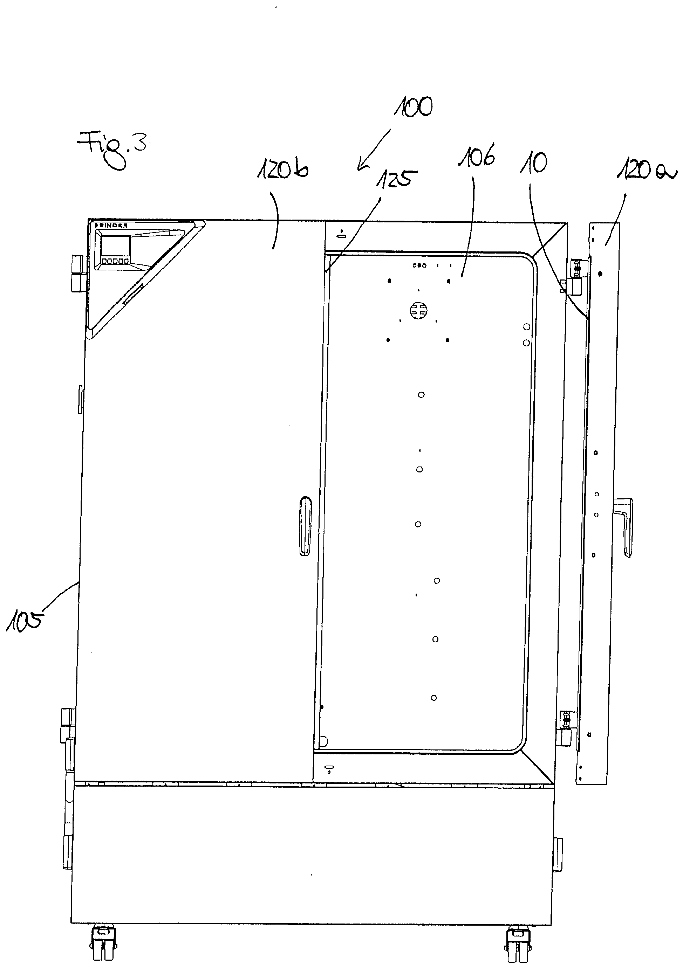

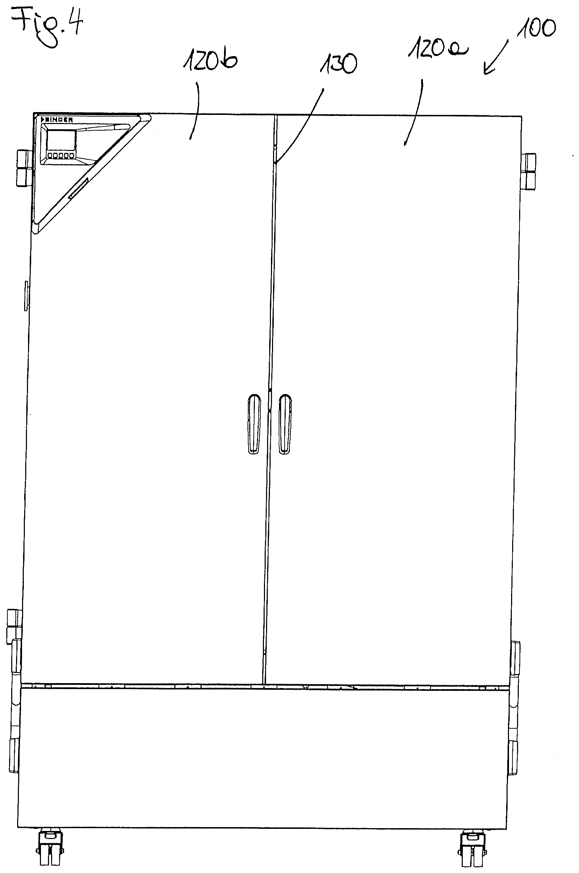

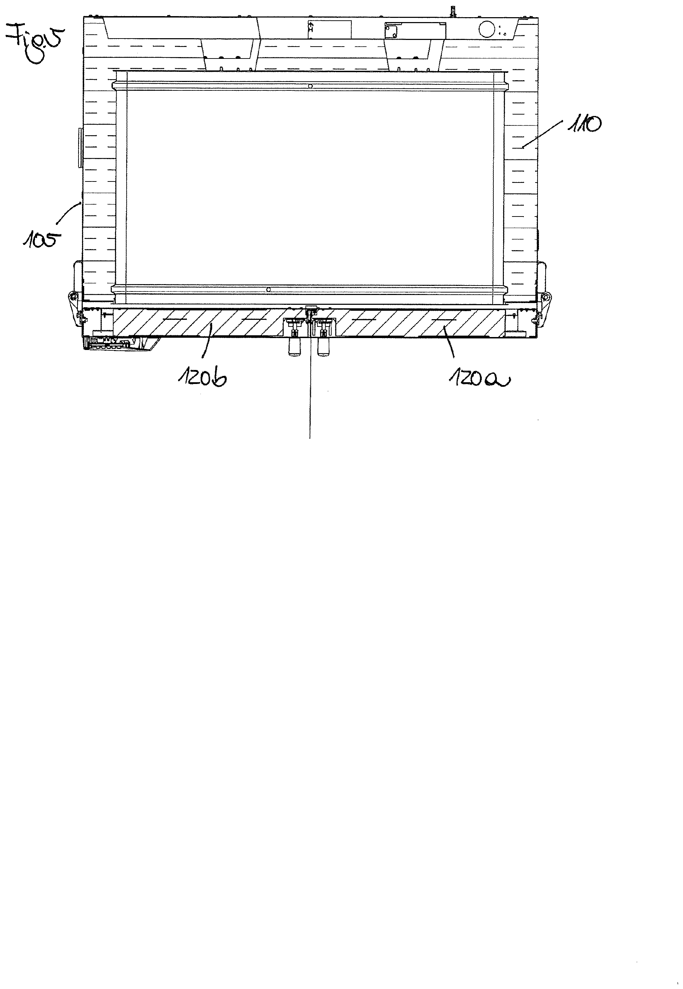

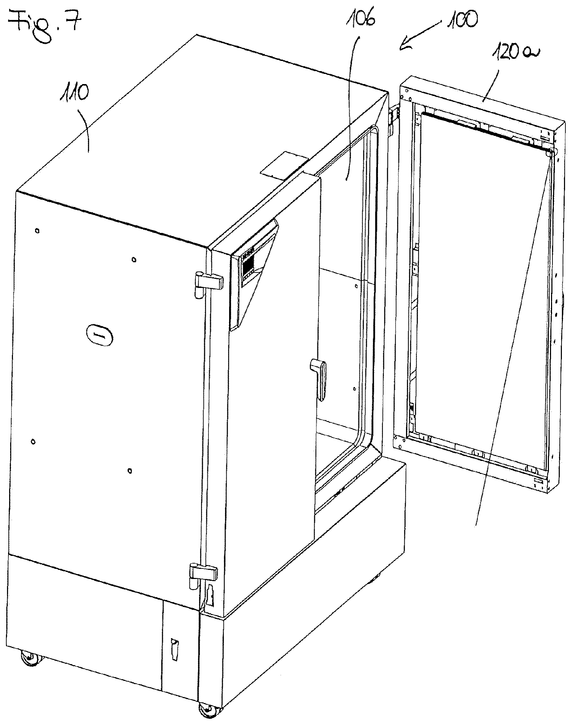

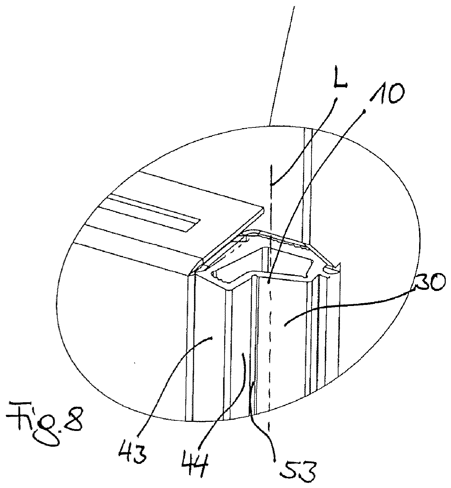

Die Figuren 1 und 2 zeigen Querschnitte eines Ausführungsbeispiels eines erfindungsgemäßen Dichtungsprofils 10, die Figuren 3 bis 8 illustrieren den Einbau eines derartigen Dichtungsprofils 10 in einen Klimaschrank 100. Gleiche oder funktionsgleiche Teile werden mit gleichen Bezugszeichen gekennzeichnet, wobei der Übersichtlichkeit halber nicht sämtliche Bezugsziffern in sämtlichen Figuren angegeben sind.

Das Dichtungsprofil 10 ist als Hohlprofil 11 mit einer Wandung 12, welche eine Innenseite 12a und eine Außenseite 12b aufweist ausgebildet. Mit der Innenseite 12a wird ein Hohlraum 14 umschlossen. Das Dichtungsprofil 10 kann aus einem Kunststoff, insbesondere einem Silikon, gefertigt sein und beispielsweise durch ein Extrusionsverfahren hergestellt werden. Das Dichtungsprofil 10 weist eine Längsachse A auf, welche senkrecht zu dem in Figur 1 dargestellten Querschnitt verläuft.

Das Hohlprofil 11 weist einen Profilfuß 20 sowie eine erste Dichtlippe 30 aufweisend ein erstes Ende 31 und ein zweites Ende 32 und eine zweite Dichtlippe 40 aufweisend ein erstes Ende 41 und ein zweites Ende 41 auf.

Der Profilfuß 20 ist etwa U-förmig mit einem ersten Profilfußschenkel 21 aufweisend eine erste Profilfußschenkellängsachse APS1, ein erstes Ende 21a und ein zweites Ende 21b sowie eine Länge LPS1, einem zweiten Profilfußschenkel 22 aufweisend eine zweite Profilfußschenkellängsachse APS2, ein erstes Ende 22a und ein zweites Ende 22b sowie eine Länge LPS2 und einem Profilfußboden 23 ausgebildet. Der erste Profilfußschenkel 21 ist mit seinem ersten Ende 21a an dem Profilfußboden 23 angeordnet, während der zweite Profilfußschenkel 22 mit seinem ersten Ende 22a an dem Profilfußboden 23 angeordnet ist. Die erste Profilfußschenkellängsachse APS1 und die zweite Profilfußschenkellängsachse APS2 sind vorzugsweise im Wesentlichen senkrecht zum Profilfußboden 23 angeordnet. Der erste Profilfußschenkel 21 und der zweite Profilfußschenkel 22 können in einer Dicke ausgehend von dem Profilfußboden 23 abnehmen, wozu die Innenseite 12a der Wandung 12 des Hohlprofils 11 gegen die erste Profilfußschenkellängsachse APS1 bzw. die zweite Profilfußschenkellängsachse APS2 geneigt ausgebildet sein kann. Die Länge LPS2 des zweiten Profilfußschenkels 22 ist größer als die Länge LPS1 des ersten Profilfußschenkels 21.

An dem Profilfuß 20 können an der Außenseite 12b der Wandung 12 des Hohlprofils 11, vorzugsweise an dem ersten Profilfußschenkel 21 und/oder dem zweiten Profilfußschenkel 22, wenigstens ein Haltemittel 24 angeordnet sein. Die Haltemittel 24 können beispielsweise als Haltelippe oder Halterippe ausgebildet sein und vorzugsweise in Richtung parallel zur Längsachse A des Dichtungsprofils 10 verlaufen.

Der Profilfußboden 23 kann an der Außenseite 12a der Wandung 12 des Hohlprofils 11 eine Riffelung 26 aufweisen, welche vorzugsweise ebenfalls in Richtung parallel zur Längsachse A des Dichtungsprofils 10 verläuft.

Die erste Dichtlippe 30 ist mit ihrem ersten Ende 31 über ein erstes Gelenk 51 an dem ersten Ende 21a des ersten Profilfußschenkels 21 angeordnet, während die zweite Dichtlippe 40 mit ihrem ersten Ende 41 über ein zweites Gelenk 52 an dem ersten Ende 22a des zweiten Profilfußschenkels 22 angeordnet ist. Das zweite Ende 32 der ersten Dichtlippe 30 und das zweite Ende 42 der zweiten Dichtlippe 40 sind über ein drittes Gelenk 53 miteinander verbunden, wobei die erste Dichtlippe 30 und die zweite Dichtlippe 40 an dem dritten Gelenk 53 einen ersten Winkel α1 bilden, welcher größer als 180° ist. Insbesondere liegt der erste Winkel α1 im unbelasteten Zustand des Dichtungsprofils 10 zwischen 230° und 250° und beträgt vorzugsweise etwa 240°(vgl. Fig. 1). Ist das Dichtungsprofil 10 wie nachfolgend noch detaillierter beschrieben in den Klimaschrank 100 eingebaut und wird durch Schließen einer Tür 120a belastet, knickt das Dichtungsprofil 10 an dem dritten Gelenk 53 ein, bis der erste Winkel α1 vorzugsweise etwa 270° beträgt (vgl. Fig. 2).

Das erste Gelenk 51, das zweite Gelenk 52 und das dritte Gelenk 53 können durch eine Materialschwächung in der Wandung 12 des Hohlprofils 11 ausgebildet sein. Auf diese Weise können die Gelenke 51, 52, 53 insbesondere nach Art eines Filmscharniers ausgebildet werden. Das dritte Gelenk 53 ist insbesondere durch eine Materialschwächung auf der Außenseite 12b der Wandung 12 des Hohlprofils 11 ausgebildet, während das erste Gelenk 51 und das zweite Gelenk 52 insbesondere durch eine Materialschwächung auf der Innenseite 12a der Wandung 12 des Hohlprofils 11 ausgebildet sind. Die Materialschwächung ist damit insbesondere auf derjenigen Seite der Wandung 12 des Hohlprofils 11 ausgebildet, auf welcher das jeweilige Gelenk 51, 52, 53 zusammenklappt.

Die erste Dichtlippe 30 kann als ebenes Element mit einer ersten Dichtlippenlängsachse AD1 ausgebildet sein. Die erste Dichtlippenlängsachse AD1 und die erste Profilfußschenkellängsachse APS1 sind in einem unbelasteten Zustand des Dichtungsprofils 10 in einem zweiten Winkel α2 zueinander angeordnet, welcher zwischen 100° und 125° liegt und vorzugsweise etwa 108° beträgt (vgl. Fig. 1). Im belasteten Zustand des Dichtungsprofils 10 verringert sich der Winkel α2 bis zu etwa 90° (vgl. Fig. 2).

Die zweite Dichtlippe 40 kann einen L-förmigen Querschnitt mit einem ersten Schenkel 43 umfassend das erste Ende 41 der zweiten Dichtlippe 40 und einem zweiten Schenkel 44 umfassend das zweite Ende 42 der zweiten Dichtlippe 40 aufweisen. Der erste Schenkel 43 weist dabei eine erste Dichtlippenschenkellängsachse ADS1 und der zweite Schenkel 44 eine zweite Dichtlippenschenkellängsachse ADS2 auf. Die beiden Schenkel 43, 44, insbesondere die erste Dichtlippenschenkellängsachse ADS1 und die zweite Dichtlippenschenkellängsachse ADS2, sind in einem dritten Winkel α3 zueinander angeordnet, welcher zwischen 80° und 90° liegt und vorzugsweise etwa 85° beträgt. Zwischen dem ersten Schenkel 43 und dem zweiten Schenkel 44 ist insbesondere kein Gelenk angeordnet, was bedeutet, dass der erste Schenkel 43 und der zweite Schenkel 44 im Rahmen der Elastizität des für das Dichtungsprofil 10 verwendeten Materials insbesondere starr relativ zueinander angeordnet sind. Bei Ausgestaltung der zweiten Dichtlippe 40 als L-förmiges Element bildet der zweite Schenkel 44, insbesondere die zweite Dichtlippenschenkellängsachse ADS2, mit der ersten Dichtlippe 30, insbesondere der ersten Dichtlippenlängsachse AD1, den ersten Winkel α1.

Die erste Dichtlippenschenkellängsachse ADS1 des ersten Schenkels 43 und die zweite Profilfußschenkellängsachse APS2 des zweiten Profilfußschenkels 22 sind im unbelasteten Zustand des Dichtungsprofils 10 in einem vierten Winkel α4 angeordnet, welcher vorzugsweise zwischen 100° und 125° liegt und beispielsweise etwa 105° beträgt (vgl. Fig. 1). Im belasteten Zustand des Dichtungsprofils 10 verringert sich der Winkel α4 bis zu etwa 90° (vgl. Fig. 2).

Der in den Figuren 3 bis 8 dargestellte Klimaschrank 100 weist ein Gehäuse 105 mit einem Grundkörper 110 und wenigstens einer zwischen einer geöffneten und einer geschlossenen Position verschwenkbaren Tür 120a, vorliegend zwei jeweils zwischen einer geöffneten und einer geschlossenen Position verschwenkbaren Türen 120a, 120b, auf, wobei das Gehäuse 105 einen Innenraum 106 umschließt. Der Klimaschrank 100 umfasst ferner einen Türanschlag 125 für die Tür 120a. Wenn nur genau eine Tür 120a vorhanden ist, kann der Türanschlag 125 vollständig an dem Grundkörper 110 angeordnet sein. Wenn, wie im vorliegenden Ausführungsbeispiel dargestellt, der Klimaschrank 100 zwei Türen 120a, 120b aufweist, kann der Türanschlag 125 für die Tür 120a zumindest für die freie Stirnkante der Tür 120a an der anderen Tür 120b angeordnet sein. Der Türanschlag 125 für die Oberkante und Unterkante der Tür 120a kann an dem Grundkörper 110 angeordnet sein.

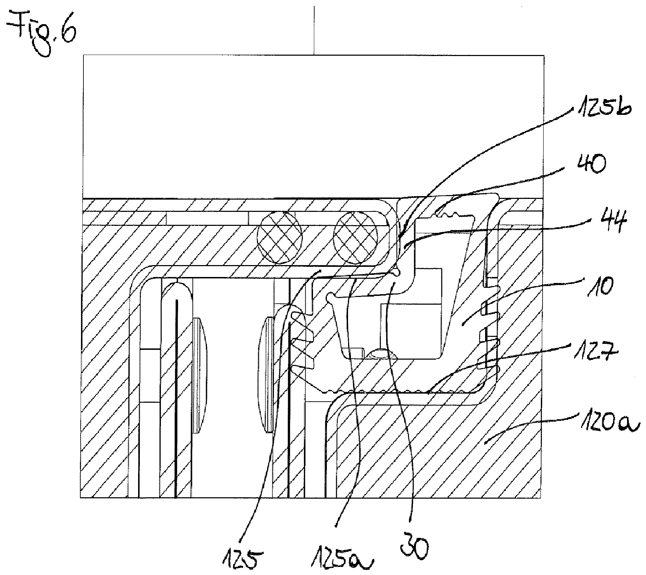

Der Türanschlag 125 weist eine erste Anschlagfläche 125a und eine zweite Anschlagfläche 125b auf, welche in einem fünften Winkel α5 zueinander angeordnet sind, wobei der fünfte Winkel α5 zwischen 80° und 100° liegt und vorzugsweise etwa 90° beträgt. Das Dichtungsprofil 10 ist zur Abdichtung eines Spalts 130 zwischen der Tür 120a und dem Türanschlag 125 ausgebildet. Dazu kann das Dichtungsprofil 10 an der Tür 120a, insbesondere in einer Nut 127, welche beispielsweise an einer Seitenkante der Tür 120a angeordnet sein kann, angeordnet sein. Das Dichtungsprofil 10 wird insbesondere dazu mit dem Profilfuß 20 in die Nut 127 eingesetzt (vgl. Fig. 6). Die Haltemittel 24 können dabei für einen ausreichenden Halt sorgen. Die Verformung der Haltemittel 24 ist dabei in Fig. 6 nicht dargestellt.

Beim Schließen der Tür 120a schwenkt der Türanschlag 125 in den Bereich zwischen der ersten Dichtlippe 30 und dem zweiten Schenkel 44 der zweiten Dichtlippe 40 ein (vgl. Fig. 6). Im geschlossenen Zustand der Tür 120a wird das Dichtungsprofil 10 belastet und verformt insbesondere derart, dass die erste Dichtlippe 30 zumindest abschnittsweise an der ersten Anschlagfläche 125a und die zweite Dichtlippe 40 zumindest abschnittsweise an der zweiten Anschlagfläche 125b, insbesondere zumindest abschnittsweise mit dem zweiten Schenkel 44 der zweiten Dichtlippe 40, anliegen.

Durch das erfindungsgemäße Dichtungsprofil 10 mit zwei Dichtlippen 30, 40, welche winklig zueinander angeordnet sind und bei Belastung relativ zueinander um das dritte Gelenk 53 verschwenken können, wird eine Abdichtung an zwei ebenfalls winklig zueinander angeordneten Anschlagflächen 125a, 125b ermöglicht, wodurch eine verbesserte Dichtwirkung erreicht werden kann.

### Bezugszeichenliste

- 10: Dichtungsprofil
- 11: Hohlprofil
- 12: Wandung
- 12a: Innenseite
- 12b: Außenseite
- 14: Hohlraum
- 20: Profilfuß
- 21: erster Profilfußschenkel
- 21a: erstes Ende
- 21b: zweites Ende
- 22: zweiter Profilfußschenkel
- 22a: erstes Ende
- 22b: zweites Ende
- 23: Profilfußboden
- 24: Haltemittel
- 26: Riffelung
- 30: erste Dichtlippe
- 31: erstes Ende
- 32: zweites Ende
- 40: zweite Dichtlippe
- 41: erstes Ende
- 42: zweites Ende
- 43: erster Schenkel
- 44: zweiter Schenkel
- 51: erstes Gelenk
- 52: zweites Gelenk
- 53: drittes Gelenk
- 100: Klimaschrank
- 105: Gehäuse
- 106: Innenraum
- 110: Grundkörper
- 120a: Tür
- 120b: Tür
- 125: Türanschlag
- 125a: erste Anschlagfläche
- 125b: zweite Anschlagfläche
- 127: Nut
- 130: Spalt
- α1: erster Winkel
- α2: zweiter Winkel
- α3: dritter Winkel
- α4: vierter Winkel
- α5: fünfter Winkel
- A: Längsachse
- AD1: erste Dichtlippenlängsachse
- ADS1: erste Dichtlippenschenkellängsachse
- ADS2: zweite Dichtlippenschenkellängsachse
- APS1: erste Profilfußschenkellängsachse
- APS2: zweite Profilfußschenkellängsachse
- LPS1: Länge des ersten Profilfußschenkels
- LPS2: Länge des zweiten Profilfußschenkels

## Patentansprüche

1. Dichtungsprofil (10) zur Abdichtung eines Spalts (130) zwischen einer Tür (120a) und einem Türanschlag (125), welches als Hohlprofil (11) mit einer Wandung (12), welche eine Innenseite (12a) und eine Außenseite (12b) aufweist und mit der Innenseite (12a) einen Hohlraum (14) umschließt, ausgebildet ist, wobei das Hohlprofil (11) einen Profilfuß (20) sowie eine erste Dichtlippe (30) aufweisend ein erstes Ende (31) und ein zweites Ende (32) und eine zweite Dichtlippe (40) aufweisend ein erstes Ende (41) und ein zweites Ende (42) aufweist, wobei der Profilfuß (20) etwa U-förmig mit einem ersten Profilfußschenkel (21) aufweisend ein erstes Ende (21a) und ein zweites Ende (21b), einem zweiten Profilfußschenkel (22) aufweisend ein erstes Ende (22a) und ein zweites Ende (22b) und einem Profilfußboden (23) ausgebildet ist, wobei der zweite Profilfußschenkel (22) länger ist als der erste Profilfußschenkel (21), wobei die erste Dichtlippe (30) mit ihrem ersten Ende (31) über ein erstes Gelenk (51) an dem ersten Ende (21a) des ersten Profilfußschenkels (21) angeordnet ist, wobei die zweite Dichtlippe (40) mit ihrem ersten Ende (41) über ein zweites Gelenk (52) an dem ersten Ende (22a) des zweiten Profilfußschenkels (22) angeordnet ist, wobei das zweite Ende (32) der ersten Dichtlippe (30) und das zweite Ende (42) der zweiten Dichtlippe (40) über ein drittes Gelenk (53) miteinander verbunden sind, und wobei die erste Dichtlippe (30) und die zweite Dichtlippe (40) an dem dritten Gelenk (53) einen ersten Winkel (α1) bilden, welcher größer als 180° ist.

2. Dichtungsprofil nach Anspruch 1,
**dadurch gekennzeichnet, dass** der erste Winkel (α1) im unbelasteten Zustand des Dichtungsprofils (10) zwischen 230° und 250° liegt und vorzugsweise etwa 240° beträgt.

3. Dichtungsprofil nach einem der vorhergehenden Ansprüche, **dadurch gekennzeichnet, dass** das erste Gelenk (51), das zweite Gelenk (52) und das dritte Gelenk (53) durch eine Materialschwächung in der Wandung (12) des Hohlprofils (11) ausgebildet sind.

4. Dichtungsprofil nach einem der vorhergehenden Ansprüche, **dadurch gekennzeichnet, dass** das dritte Gelenk (53) durch eine Materialschwächung auf der Außenseite (12b) der Wandung (12) des Hohlprofils (11) ausgebildet ist.

5. Dichtungsprofil nach einem der vorhergehenden Ansprüche, **dadurch gekennzeichnet, dass** das erste Gelenk (51) durch eine Materialschwächung auf der Innenseite (12a) der Wandung (12) des Hohlprofils (11) ausgebildet ist.

6. Dichtungsprofil nach einem der vorhergehenden Ansprüche, **dadurch gekennzeichnet, dass** das zweite Gelenk (52) durch eine Materialschwächung auf der Innenseite (12a) der Wandung (12) des Hohlprofils (11) ausgebildet ist.

7. Dichtungsprofil nach einem der vorhergehenden Ansprüche, **dadurch gekennzeichnet, dass** die erste Dichtlippe (30) als ebenes Element ausgebildet ist.

8. Dichtungsprofil nach einem der vorhergehenden Ansprüche, **dadurch gekennzeichnet, dass** die erste Dichtlippe (30) eine erste Dichtlippenlängsachse (AD1) und der erste Profilfußschenkel (21) eine erste Profilfußschenkellängsachse (APS1) aufweist, welche in einem unbelasteten Zustand des Dichtungsprofils (10) in einem zweiten Winkel (α2) zwischen 100° und 125°, wobei vorzugsweise der zweite Winkel (α2) etwa 108° beträgt, zueinander angeordnet sind.

9. Dichtungsprofil nach einem der vorhergehenden Ansprüche, **dadurch gekennzeichnet, dass** die zweite Dichtlippe (40) einen L-förmigen Querschnitt mit einem ersten Schenkel (43) umfassend das erste Ende (41) der zweiten Dichtlippe (40) und einem zweiten Schenkel (44) umfassend das zweite Ende (42) der zweiten Dichtlippe (40) aufweist, wobei die beiden Schenkel (43, 44) in einem dritten Winkel (α3) zwischen 80° und 90°, wobei vorzugsweise der dritte Winkel (α3) etwa 85° beträgt, zueinander angeordnet sind, insbesondere starr relativ zueinander.

10. Dichtungsprofil nach Anspruch 9,
**dadurch gekennzeichnet, dass** der erste Schenkel (43) der zweite Dichtlippe (40) eine erste Dichtlippenschenkellängsachse (ADS1) und der zweite Profilfußschenkel (22) eine zweite Profilfußschenkellängsachse (APS2) aufweist, welche in einem unbelasteten Zustand des Dichtungsprofils (10) in einem vierten Winkel (α4) zwischen 100° und 125°, wobei vorzugsweise der vierte Winkel (α4) etwa 105° beträgt, zueinander angeordnet sind.

11. Dichtungsprofil nach einem der vorhergehenden Ansprüche,
**dadurch gekennzeichnet, dass** an dem Profilfuß (20) an der Außenseite (12b) der Wandung (12) des Hohlprofils (11), vorzugsweise an dem ersten Profilfußschenkel (21) und/oder dem zweiten Profilfußschenkel (22), wenigstens ein Haltemittel (24) angeordnet ist, welches vorzugsweise als Haltelippe oder Halterippe ausgebildet ist.

12. Dichtungsprofil nach einem der vorhergehenden Ansprüche,
**dadurch gekennzeichnet, dass** der Profilfußboden (23) an der Außenseite (12b) der Wandung (12) des Hohlprofils (11) eine Riffelung (26) aufweist.

13. Dichtungsprofil nach einem der vorhergehenden Ansprüche,
**dadurch gekennzeichnet, dass** das Dichtungsprofil (10) aus einem Kunststoff, vorzugsweise einem Silikon, gefertigt ist.

14. Klimaschrank (100) mit einer zwischen einer geöffneten und einer geschlossenen Position verschwenkbaren Tür (120a) und einem Türanschlag (125), welcher eine erste Anschlagfläche (125a) und eine zweite Anschlagfläche (125b) aufweist, welche in einem fünften Winkel (α5) zwischen 80° und 100°, wobei vorzugsweise der fünfte Winkel (α5) etwa 90° beträgt, zueinander angeordnet sind, wobei an der Tür (120a) ein Dichtungsprofil (10) nach einem der vorhergehenden Ansprüche angeordnet ist, und wobei in einem geschlossenen Zustand der Tür (120a) die erste Dichtlippe (30) zumindest abschnittsweise an der ersten Anschlagfläche (125a) und die zweite Dichtlippe (40) zumindest abschnittsweise an der zweiten Anschlagfläche (125b) anliegen.
